# FASCICULE DE BREVET EUROPEEN

(11) **EP 3 203 405 B1**
(45) Date de publication et mention de la délivrance du brevet: **28.08.2019**
(21) Numéro de dépôt: 17154533.8
(22) Date de dépôt: 03.02.2017
(51) Int. Cl.: G06F 21/52

(54) **PROCEDE D'EXECUTION D'INSTRUCTIONS D'APPLICATIONS ORIENTEES OBJET PAR UN INTERPRETEUR**
VERFAHREN ZUR AUSFÜHRUNG VON OBJEKTORIENTIERTEN ANWENDUNGSANWEISUNGEN DURCH EINEN DOLMETSCHER
METHOD FOR EXECUTING INSTRUCTIONS OF OBJECT-ORIENTED APPLICATIONS BY AN INTERPRETER

(30) Priorité: 05.02.2016 FR 1650925
(43) Date de publication de la demande: 09.08.2017
(73) Titulaire: Idemia Identity & Security France, 92400 Courbevoie (FR)
(72) Inventeur: CROHEN, Aude, 92130 Issy Les Moulineaux (FR); AMMOUCHE, Karim Madjid, 92130 Issy Les Moulineaux (FR); DUCLOS, Rémi Louis Marie, 92130 Issy Les Moulineaux (FR)
(74) Mandataire: Cabinet Le Guen Maillet

(56) Documents cités:
- WO-A1-98/54633
- WO-A1-2007/068706

## Description

La présente invention concerne un système d'exploitation comportant un interpréteur qui permet une exécution d'applications, développées en langage orienté objet et compilées sous forme de code intermédiaire (dit « bytecode » en anglais) indépendant d'un matériel de carte électronique grâce auquel lesdites applications sont exécutées, qui soit résistante à des attaques par perturbation. L'invention est plus particulièrement adaptée au domaine des cartes à puce.

Une carte à puce comporte au moins un circuit intégré capable de contenir et de traiter de l'information. Le circuit intégré, *i.e.* la puce, contient un microprocesseur ou microcontrôleur capable de traiter l'information, qui est stockée dans une mémoire non volatile.

Le microprocesseur ou microcontrôleur permet d'implémenter un système d'exploitation qui assure le déroulement d'échanges d'informations et de traitements réalisés au sein de la carte puce. Le système d'exploitation définit un environnement d'exécution de code intermédiaire. Cet environnement d'exécution est appelé JCRE (« Java Card Runtime Environment » en anglais) en terminologie Java Card. Le système d'exploitation comporte un interpréteur permettant l'exécution du code intermédiaire d'applications, aussi dénommées *applets,* installées en mémoire non volatile sur la carte à puce. Cet interpréteur est parfois appelé *machine virtuelle,* JCVM (« Java Card Virtual Machine » en anglais) en terminologie Java Card. Le système d'exploitation comporte également un ensemble de librairies contenant les fonctions de base (APIs, pour « Application Programming Interfaces » en anglais) utiles au développement d'applications pour cartes à puce. On pourra notamment se référer aux spécifications « Java Card Classic Plateform », version 3.0.4.

Certaines applications destinées à être exécutées au sein de la carte à puce sont écrites dans un langage de programmation orienté objet, par exemple Java, sont compilées, puis sont converties sous forme de fichiers qui contiennent un ensemble de composants représentant une version compacte des applications. Ces fichiers sont appelés fichiers CAP (« Converted APplets » en anglais) en terminologie Java Card. Parmi ces composants, on retrouve le composant des méthodes (« method component » en anglais) qui correspond à la version exécutable sous forme de code intermédiaire des méthodes implémentées dans une application. Alors que le code exécutable de l'application, issu de la compilation du code source et de sa conversion, est indépendant du matériel (processeur) sur lequel il est ensuite destiné à être exécuté, l'interpréteur, qui est en charge de l'exécution du code de l'application, est exécuté directement par le processeur.

La carte à puce est principalement utilisée comme moyens d'identification personnelle, ou de paiement, ou preuve d'abonnement à des services prépayés. Ainsi, la carte à puce contient des données considérées comme confidentielles. Les cartes à puce peuvent ainsi faire l'objet d'attaques, qui ont pour finalité de récupérer ces données confidentielles. Ces attaques peuvent être physiques ou logiques. Les attaques logiques consistent à faire exécuter par le système d'exploitation, et plus particulièrement l'interpréteur, des applications malveillantes, qui contiennent par exemple des séquences de code intermédiaire ne respectant pas les règles Java Card. Parmi les attaques physiques, il existe plus particulièrement des attaques dites *par perturbation* qui consistent à injecter de l'énergie sur un point précis de la puce à un instant précis, grâce par exemple à un laser ou une impulsion électromagnétique. Le point d'attaque et l'instant de l'attaque sont déterminés par l'attaquant pour que l'énergie appliquée modifie l'état logique des instructions exécutées par l'interpréteur et/ou des données manipulées par l'interpréteur.

Pour lutter contre des attaques par perturbation visant à modifier des données stockées en mémoire volatile ou non volatile, l'interface de programmation applicative Java Card 3.0.5 propose un mécanisme de sécurité permettant de créer des tableaux « sensibles en intégrité », par le biais de la classe « SensitiveArrays ». Cette approche consiste à inclure à ces tableaux des éléments de contrôle d'intégrité respectifs. La vérification de ces éléments de contrôle d'intégrité doit être requise, manuellement, par le développeur de l'application au moment qui lui semble opportun dans le code source de l'application. Outre le fait que cette approche ne permet pas de sécuriser tout type d'objet dans l'écriture du code source, mais seulement des tableaux, cette approche présente surtout l'inconvénient d'en laisser reposer la fiabilité sur le développeur de l'application lui-même. En effet, si le développeur de l'application ne prend pas garde à faire appel à la vérification des éléments de contrôle d'intégrité aux moments opportuns dans l'écriture du code source de l'application, la fiabilité du mécanisme de sécurité s'en trouve remise en cause. L'écriture du code source est par conséquent particulièrement fastidieuse pour le développeur, la maintenance du code source s'en trouve complexifiée, et la place occupée par le code de l'application en mémoire non volatile s'en trouve augmentée.

Il est connu le document de brevet WO 98/54633 A1, qui divulgue l'adjonction de métadonnées à un objet pour le protéger, et plus particulièrement : un drapeau qui indique si l'objet est protégé ou non ; et, une donnée de vérification d'intégrité, obtenue par exemple en appliquant un algorithme de signature numérique.

Les problèmes décrits ci-dessus ne se limitent pas au contexte des cartes à puce. En effet, les mêmes problèmes se posent vis-à-vis de cartes électroniques, comme par exemple celles contenues dans les téléphones intelligents (« smartphones » en anglais) ou dans les ordinateurs, lorsque de telles cartes électroniques implémentent des systèmes d'exploitation tels que susmentionnés.

Il est souhaitable de pallier ces inconvénients de l'état de la technique. Il est plus particulièrement souhaitable de fournir une solution, résistante aux attaques par perturbation susmentionnées, de fiabilité renforcée. Il est plus particulièrement souhaitable de fournir une solution dont la fiabilité ne repose pas sur les développeurs des applications à faire exécuter par l'interpréteur.

A cet effet, l'invention concerne un procédé d'exécution d'une application, développée en langage orienté objet et compilée en code intermédiaire, le procédé étant mis en oeuvre par un système d'exploitation installé sur une carte électronique, le système d'exploitation comportant un interpréteur qui est un logiciel interprétant et exécutant le code intermédiaire de l'application. Le procédé est tel que, lorsque l'interpréteur détecte un appel à une fonction dédiée du système d'exploitation dans le code intermédiaire de l'application vis-à-vis d'un objet à protéger de l'application ou d'une donnée membre à protéger dudit objet, le système d'exploitation met à jour des métadonnées associées audit objet de sorte à associer une donnée de vérification d'intégrité de référence audit objet ou respectivement à ladite donnée membre. De plus, lorsque l'interpréteur détecte une manipulation ultérieure de l'objet protégé ou respectivement de ladite donnée membre protégée dans le code intermédiaire de l'application, le système d'exploitation détermine une valeur de donnée de vérification d'intégrité correspondant audit objet protégé en l'état ou respectivement de ladite donnée membre protégée en l'état, et avant que l'interpréteur n'effectue ladite manipulation, le système d'exploitation vérifie que la valeur de donnée de vérification d'intégrité calculée concorde avec la valeur de donnée de vérification d'intégrité de référence. Ainsi, grâce à la donnée de vérification de référence, les manipulations des objets de l'application sont résistantes aux attaques par perturbation. La vérification d'intégrité étant effectuée par le système d'exploitation, le développeur de l'application a un simple appel à ladite fonction dédiée à intégrer dans le code source de l'application après la création dudit objet et n'a pas à se soucier des moments où la vérification d'intégrité doit être effectuée.

Selon un mode de réalisation particulier, sur appel à ladite fonction dédiée dans le code intermédiaire de l'application vis-à-vis d'un objet à protéger de l'application ou d'une donnée membre à protéger dudit objet, le système d'exploitation met à jour les métadonnées associées audit objet de sorte à indiquer que ledit objet ou respectivement ladite donnée membre est protégé(e). De plus, lors d'une manipulation ultérieure d'un objet ou respectivement d'une donnée membre d'un objet dans le code intermédiaire de l'application, le système d'exploitation vérifie si ledit objet ou respectivement ladite donnée membre est protégé(e), et si tel n'est pas le cas, le système d'exploitation n'effectue pas de vérification d'intégrité pour ledit objet ou respectivement ladite donnée membre.

Selon un mode de réalisation particulier, lorsque le code intermédiaire de l'application demande une modification d'un objet protégé ou d'une donnée membre protégée d'un objet, le système d'exploitation détermine en conséquence une nouvelle donnée de vérification d'intégrité de référence à associer audit objet protégé ou respectivement à ladite donnée membre protégée.

Selon un mode de réalisation particulier, lesdites métadonnées comprennent une référence pointant sur ladite donnée de vérification d'intégrité de référence.

Selon un mode de réalisation particulier, l'interpréteur utilise une pile (« stack » en anglais) d'exécution pour empiler des variables d'exécution de l'application, à laquelle est adjointe une pile (« stack » en anglais) de sécurité pour empiler en correspondance des données de vérification permettant de vérifier, avant leur manipulation, que les variables d'exécution de l'application n'ont pas été corrompues, et, lorsqu'une référence sur un objet protégé ou sur une donnée membre protégée d'un objet est placée dans la pile d'exécution, une référence sur la valeur d'intégrité associée audit objet protégé ou à ladite donnée membre protégée est placée en correspondance dans la pile de sécurité, de telle sorte que, lorsque le système d'exploitation vérifie que la valeur de donnée de vérification d'intégrité calculée pour ledit objet protégé ou ladite donnée membre protégée concorde avec la valeur de donnée de vérification d'intégrité de référence, le système d'exploitation vérifie en outre que la valeur de donnée de vérification d'intégrité calculée pour ledit objet protégé ou ladite donnée membre protégée concorde avec la valeur pointée par la référence correspondante placée sur la pile de sécurité.

Selon un mode de réalisation particulier, la carte électronique est une carte à puce, l'application est une application Java Card, le système d'exploitation prend la forme d'un environnement JCRE, et l'interpréteur prend la forme d'une machine virtuelle JCVM.

L'invention concerne également une carte électronique configurée pour exécuter une application, développée en langage orienté objet et compilée en code intermédiaire, le code intermédiaire étant exécuté par un interpréteur d'un système d'exploitation installé sur ladite carte électronique, l'interpréteur étant un logiciel interprétant et exécutant le code intermédiaire de l'application. La carte électronique est configurée pour que, lorsque l'interpréteur détecte un appel à une fonction dédiée du système d'exploitation dans le code intermédiaire de l'application vis-à-vis d'un objet de l'application ou d'une donnée membre dudit objet, le système d'exploitation met à jour des métadonnées associées audit objet de sorte à associer une donnée de vérification d'intégrité de référence audit objet ou respectivement à ladite donnée membre, et, lorsque l'interpréteur détecte une manipulation ultérieure dudit objet ou respectivement de ladite donnée membre dans le code intermédiaire de l'application, le système d'exploitation détermine une valeur de donnée de vérification d'intégrité correspondant audit objet ou respectivement de ladite donnée membre en l'état, et avant que l'interpréteur n'effectue ladite manipulation, le système d'exploitation vérifie que la valeur de donnée de vérification d'intégrité calculée concorde avec la valeur de donnée de vérification d'intégrité de référence associée audit objet ou respectivement à ladite donnée membre.

Selon un mode de réalisation particulier, ladite carte électronique est une carte à puce.

L'invention concerne également un programme d'ordinateur, qui peut être stocké sur un support et/ou téléchargé d'un réseau de communication, afin d'être lu par un processeur. Ce programme d'ordinateur comprend des instructions pour implémenter le procédé mentionné ci-dessus dans l'un quelconque de ses modes de réalisation, lorsque ledit programme est exécuté par le processeur. L'invention concerne également un support de stockage d'informations stockant un tel programme d'ordinateur.

Les caractéristiques de l'invention mentionnées ci-dessus ainsi que d'autres, apparaîtront plus clairement à la lecture de la description suivante d'un exemple de réalisation, ladite description étant faite en relation avec les dessins joints parmi lesquels:
- la Fig. 1 illustre schématiquement une architecture matérielle de dispositif, tel qu'une carte à puce, dans lequel la présente invention peut être implémentée ;
- la Fig. 2A illustre schématiquement une modification d'un objet d'une application, afin de permettre à un système d'exploitation installé sur ledit dispositif, de protéger ledit objet contre des attaques par perturbation ;
- la Fig. 2B illustre schématiquement une alternative à la Fig. 2A ; et
- la Fig. 3 illustre schématiquement un algorithme, implémenté par un interpréteur du système d'exploitation, de traitement de code intermédiaire de ladite application.

La description qui suit détaille plus particulièrement des modes de réalisation de la présente invention dans un contexte de carte à puce. Les principes décrits ici s'appliquent toutefois à d'autres types de carte électronique que les cartes à puce, comme par exemple les cartes électroniques contenues dans les téléphones intelligents ou dans les ordinateurs, lorsque de telles cartes électroniques implémentent des systèmes d'exploitation comportant des interpréteurs respectifs dont le rôle est d'interpréter et d'exécuter un code intermédiaire obtenu par compilation d'applications développées en langage orienté objet.

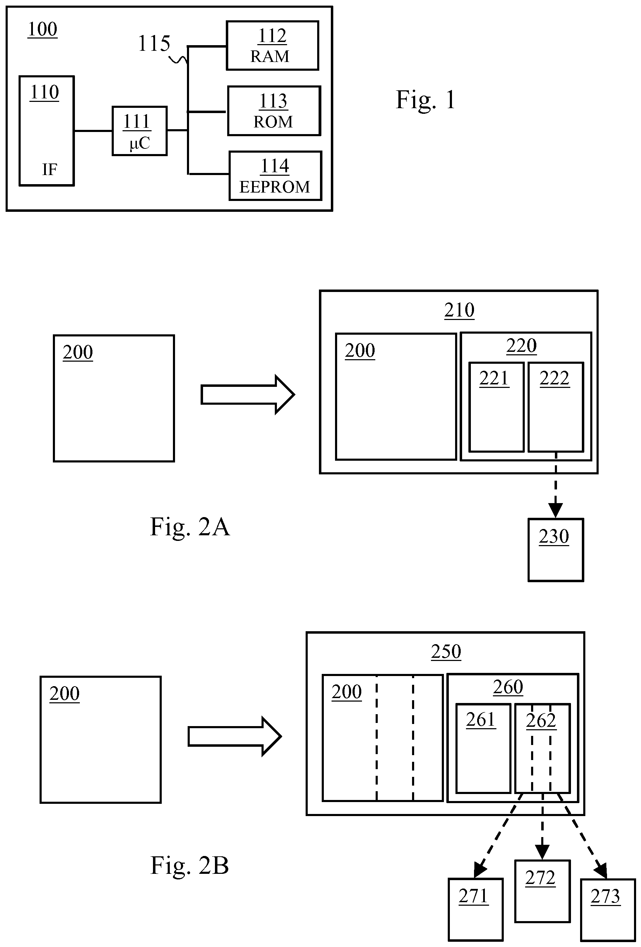

La Fig. 1 illustre schématiquement une architecture matérielle d'un dispositif 100, tel qu'une carte à puce, dans lequel la présente invention peut être implémentée. Considérons plus particulièrement que le dispositif 100 est une carte à puce.

La carte à puce 100 comporte une interface 110 configurée pour connecter la carte à puce 100 à un lecteur de carte (non représenté sur la Fig. 1). La carte à puce 100 est par exemple une carte bancaire et le lecteur de carte est un terminal de paiement. L'interface 110 est ainsi configurée pour permettre d'effectuer des échanges de données entre le lecteur de carte et la carte à puce 100, notamment de permettre au lecteur de carte d'envoyer des commandes à la carte à puce 100, et aussi permettre au lecteur de carte d'alimenter en énergie la carte à puce 100.

La carte à puce 100 comporte en outre un processeur, typiquement sous la forme d'un microcontrôleur µC 111 ou d'un microprocesseur, en charge d'effectuer des traitements au sein de la carte à puce 100 : calculs, transferts de données, etc.

La carte à puce 100 comporte en outre une mémoire vive RAM (« Random Access Memory » en anglais) 112, une mémoire morte ROM (« Read Only Memory » en anglais) 113, et une mémoire non volatile, comme par exemple une mémoire EEPROM (« Electronically Erasable Programmable ROM » en anglais) 114.

Lorsque la carte à puce 100 est alimentée en énergie par le lecteur de carte via l'interface 110, le microcontrôleur µC 111 est capable d'exécuter des instructions, notamment sous forme de code intermédiaire, à partir de la mémoire morte ROM 113 et/ou de la mémoire EEPROM 114.

La mémoire morte ROM 113 contient typiquement des instructions causant l'implémentation d'un système d'exploitation, préférentiellement un environnement JCRE selon la technologie Java Card, en s'appuyant sur la mémoire vive RAM 112 pour créer, au moins, une pile (« stack » en anglais) d'exécution et pour stocker temporairement des données, telles que des données de vérification d'intégrité.

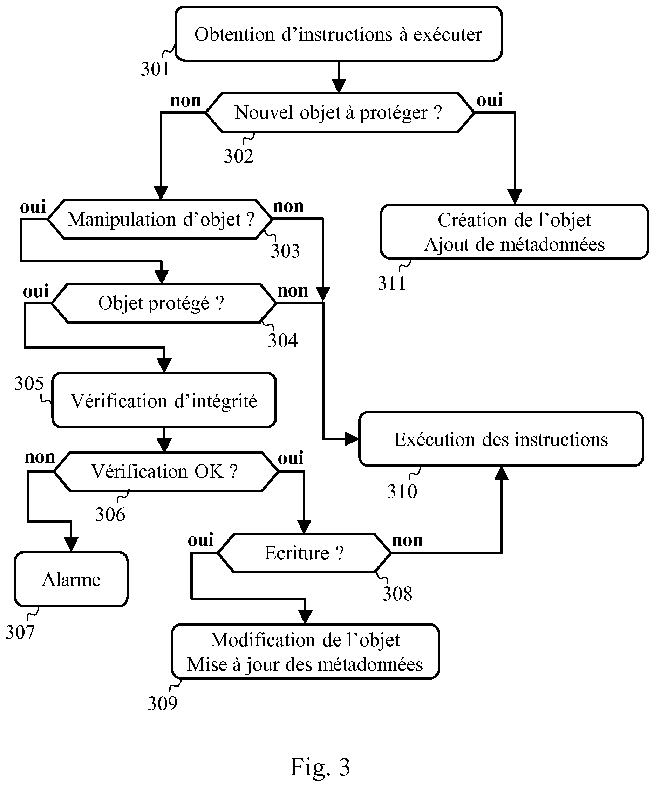

La mémoire EEPROM 114 contient typiquement des instructions d'applications installées sur la carte à puce 100, et plus particulièrement, lorsque l'application est instanciée, des objets desdites applications. Le contrôle de la création de ces objets et l'attribution d'espace mémoire pour manipuler ces objets sont réalisés par un interpréteur, préférentiellement une machine virtuelle JCVM de l'environnement JCRE selon la technologie Java Card, en charge d'assurer l'exécution du code intermédiaire, lu depuis la mémoire EEPROM 114, des applications par le microcontrôleur µC 111. La manipulation des objets, dans le cadre de la présente invention, par l'interpréteur est décrite ci-après en relation avec la Fig. 3.

A noter que, lorsque le système d'exploitation est implémenté sur une carte électronique autre qu'une carte à puce, le microcontrôleur µC 111 est capable d'exécuter des instructions chargées dans la mémoire vive RAM 112 à partir de la mémoire morte ROM 113 et/ou de la mémoire EEPROM 114, une fois que ladite carte électronique est alimentée en énergie.

La **Fig. 2A** illustre schématiquement une modification d'un objet d'une application instanciée, afin de permettre à l'interpréteur, de protéger ledit objet contre des attaques par perturbation.

Chaque application est développée en langage orienté objet, un objet étant une instance de classe. Le programmeur de l'application en question a la possibilité de décider que tel ou tel objet de l'application va devoir être protégé, ou que tel ou tel autre objet de l'application n'a pas besoin d'être spécifiquement protégé. Pour ce faire, lorsque le développeur décide qu'un objet doit être protégé, le développeur appelle une fonction dédiée F du système d'exploitation dans le code source de l'application. L'appel à cette fonction dédiée F vis-à-vis dudit objet est préférentiellement réalisé immédiatement après la création de l'objet en question.

A partir de ce moment, le développeur de l'application n'a plus, dans l'écriture du code source de l'application, à s'inquiéter de la vérification de l'intégrité de l'objet. En effet, comme décrit ci-après en relation avec la Fig. 3, la vérification de l'intégrité de l'objet est à la charge du système d'exploitation et est donc transparente pour le développeur.

Une difficulté peut résider dans le fait que l'appel des méthodes de création (« byte code new ») et des méthodes d'initialisation (*constructeurs*) des objets peut être effectué par du code système inaccessible directement par le développeur au niveau applicatif. Dans un mode de réalisation particulier, pour prendre en compte ce cas de figure, ladite fonction dédiée F est appelée dans le constructeur de la classe concernée. Ce constructeur étant défini dans le système d'exploitation et non dans l'application, ladite fonction dédiée F est toujours appelée pour les objets de ladite classe.

Chaque objet étant constitué de données et de métadonnées système nécessaires au fonctionnement de l'interpréteur, des métadonnées additionnelles sont ajoutées à tout objet lors de sa création. Deux métadonnées additionnelles sont ainsi ajoutées à tous les objets de l'application en question lors de leurs créations respectives. A la création de chaque objet, des métadonnées additionnelles sont ainsi associées audit objet, ces métadonnées additionnelles contenant respectivement des valeurs par défaut qui indiquent que l'objet en question n'est (par défaut) pas protégé.

Lorsqu'un objet 200 est à protéger, l'interpréteur détecte ainsi l'appel à ladite fonction dédiée F qui a été inséré à cet effet dans le code source de l'application par le développeur. L'interpréteur fait alors appel au système d'exploitation afin de modifier la valeur des métadonnées additionnelles 220 qui sont associées à l'objet 200 à protéger. Ces métadonnées 220 comportent alors : un marqueur 221, indiquant que pendant l'exécution de l'application, l'objet 200 en question est un objet protégé ; et une donnée de vérification d'intégrité 222.

La donnée de vérification d'intégrité est par exemple une somme de contrôle de redondance cyclique CRC (« Cyclic Redundancy Checksum » en anglais), ou une duplication de donnée de l'objet 200, ou toute autre donnée permettant de vérifier l'intégrité de l'objet 200 en question. Au cours de l'exécution de ladite fonction dédiée F, le système d'exploitation applique en conséquence une règle prédéfinie pour déterminer la valeur de la donnée de vérification d'intégrité à associer à l'objet en question. La donnée de vérification d'intégrité déterminée à cet instant sert ultérieurement de référence lorsque l'objet en question est manipulé par l'interpréteur en cours d'exécution de l'application à laquelle ledit objet appartient.

Dans un mode de réalisation préférentiel, les métadonnées 220 n'incluent pas directement la donnée de vérification d'intégrité susmentionnée, mais une référence (*i.e.* une information de localisation mémoire) pointant sur ladite donnée de vérification d'intégrité, qui est alors stockée ailleurs en mémoire. C'est cette situation qui est représentée sur la Fig. 2A, où les métadonnées 220 incluent une référence 222 pointant sur une donnée de vérification d'intégrité 230.

Suite à l'exécution de ladite fonction dédiée F, l'interpréteur obtient ainsi, grâce aux opérations décrites ci-dessus, un nouvel objet 210 contenant l'objet 200 (comportant les métadonnées système) qui était à protéger ainsi que, en association avec ledit objet 200, les métadonnées additionnelles 220.

Lorsque les objets ainsi créés sont stockés dans la mémoire EEPROM 114, les métadonnées additionnelles desdits objets sont aussi stockées dans la mémoire EEPROM 114. Les données de vérification d'intégrité peuvent, dans ce cas, être aussi stockées dans la mémoire EEPROM 114 à la création de l'objet en question, mais sont préférentiellement stockées en mémoire vive RAM 112 pour permettre à l'interpréteur de pouvoir y accéder plus rapidement. Lorsque les objets ainsi créés sont stockés en mémoire vive RAM 112, les métadonnées additionnelles desdits objets sont préférentiellement stockées dans la mémoire EEPROM 114. Le système d'exploitation regroupe alors dans une structure de données auxiliaire les métadonnées dans la mémoire EEPROM 114 et l'adresse physique des données utilisateurs, et donc des objets en question, en mémoire RAM 112. Les données de vérification d'intégrité peuvent, dans ce cas, être aussi stockées dans la mémoire EEPROM 114 à la création de l'objet en question, mais peuvent, en variante, être stockées en mémoire vive RAM 112 pour permettre à l'interpréteur de pouvoir y accéder plus rapidement. D'une manière générale, les données de vérification sont stockées dans une mémoire d'accès au moins aussi rapide que l'accès à la mémoire dans laquelle sont stockés les objets auxquels lesdites données de vérification s'appliquent.

La **Fig. 2B** illustre schématiquement une alternative à la Fig. 2A.

Chaque objet comporte une pluralité de données membres. Sur la Fig. 2B, les données membres de l'objet 200 sont schématiquement délimitées par des pointillés. Comme décrit ci-dessus, des métadonnées additionnelles 260 sont ajoutées à l'objet 200 pour permettre de protéger l'objet 200 contre des attaques par perturbation.

Ces métadonnées additionnelles 260 comportent alors un ensemble 261 de *M* marqueurs, par exemple sous la forme d'un champ de *N* bits, où *N* représente la quantité de données membres qui composent l'objet 200 et *M (M ≤ N)* représente la quantité de données membres à protéger. Chaque marqueur est ainsi associé à une donnée membre à protéger. Les métadonnées additionnelles 260 comportent aussi un ensemble 262 de *M* données de vérification d'intégrité, une donnée de vérification pour chacun des *M* marqueurs. Sur la Fig. 2B, il est considéré que *M* = *N* et donc que chaque donnée membre de l'objet 200 doit être protégée. La Fig. 2B présente alors trois données de vérification d'intégrité 271, 272, 273.

La **Fig. 3** illustre schématiquement un algorithme, implémenté par l'interpréteur, de traitement de code intermédiaire de ladite application.

Dans une étape 301, l'interpréteur obtient du code intermédiaire à interpréter et à exécuter dans le cadre de l'exécution de ladite application. Ce code intermédiaire est typiquement obtenu à partir de la mémoire EEPROM 114.

Dans une étape 302 suivante, l'interpréteur vérifie si le code intermédiaire obtenu à l'étape 301 correspond à une mise en place d'une protection pour un nouvel objet, c'est-à-dire un appel, pour ledit objet, à la fonction dédiée F mentionnée ci-dessus en relation avec la Fig. 2A. Si tel est le cas, une étape 311 est effectuée ; sinon, une étape 303 est effectuée.

Dans l'étape 303, l'interpréteur vérifie si le code intermédiaire obtenu à l'étape 301 correspond à une manipulation d'objet précédemment créé. Si tel est le cas, une étape 304 est effectuée ; sinon, une étape 310 est effectuée.

Dans l'étape 304, l'interpréteur vérifie si l'objet en question est protégé. En référence à la description de la Fig. 2A ci-dessus, l'interpréteur vérifie si l'objet en question est associé à des métadonnées additionnelles comportant un marqueur indiquant que l'objet en question est protégé. Si tel est le cas, une étape 305 est effectuée ; sinon, l'étape 310 est effectuée.

Dans l'étape 305, l'interpréteur fait appel au système d'exploitation pour vérifier l'intégrité de l'objet en question. L'interpréteur pourrait en variante faire cette vérification lui-même (l'interpréteur étant considéré comme faisant partie du système d'exploitation). Pour ce faire, le système d'exploitation applique ici la même règle que celle qui a été décrite ci-dessus en relation avec la Fig. 2A pour déterminer la donnée de vérification d'intégrité qui sert de référence. Le système d'exploitation compare donc la donnée de vérification d'intégrité obtenue à l'étape 305, c'est-à-dire en considérant l'objet concerné en l'état, avec la donnée de vérification d'intégrité qui sert de référence. Si ces données concordent (« match » en anglais), cela signifie que la vérification d'intégrité de l'objet en question est un succès ; sinon, cela signifie que la vérification d'intégrité de l'objet en question est un échec.

Dans l'étape 306, l'interpréteur vérifie si la vérification d'intégrité de l'objet en question est un succès. Si tel est le cas, une étape 308 est effectuée ; sinon, une étape 307 est effectuée.

Dans l'étape 307, l'interpréteur entre dans une situation d'alarme. La vérification d'intégrité de l'objet en question ayant été un échec, une attaque par perturbation est suspectée. L'interpréteur peut arrêter l'exécution du code intermédiaire de l'application, ou générer une exception qui va exécuter une routine d'alarme dédiée. Il est alors mis fin à l'algorithme de la Fig. 3.

Dans l'étape 308, l'interpréteur vérifie si le code intermédiaire obtenu à l'étape 301 correspond à des opérations d'écriture, c'est-à-dire de modification de l'objet en question. Si tel est le cas, une étape 309 est effectuée ; sinon, l'étape 310 est effectuée.

Dans l'étape 309, l'interpréteur modifie l'objet en question de la manière requise par le code intermédiaire obtenu à l'étape 301. Puis, l'interpréteur fait appel au système d'exploitation pour déterminer une nouvelle donnée de vérification d'intégrité, comme décrit ci-dessus en relation avec la Fig. 2A, qui correspond à l'objet en question ainsi modifié. Le système d'exploitation remplace alors la précédente donnée de vérification d'intégrité par la nouvelle donnée de vérification d'intégrité. L'interpréteur pourrait en variante faire cette mise à jour de la donnée d'intégrité lui-même (l'interpréteur étant considéré comme faisant partie du système d'exploitation). En référence à la description de la Fig. 2A ci-dessus, lorsque les métadonnées 220 incluent une référence pointant sur la donnée de vérification d'intégrité applicable (plutôt que la donnée de vérification elle-même), le système d'exploitation n'a pas besoin de modifier lesdites métadonnées 220. Ainsi, lorsque la donnée de vérification d'intégrité applicable est stockée en mémoire vive RAM 112 alors que l'objet 210, ainsi que les métadonnées qui lui sont associées, sont stockés en mémoire EEPROM 114, la mise à jour de l'objet 210 pour prendre en compte la modification de l'objet 200 est plus rapide que si la donnée de vérification d'intégrité applicable avait été aussi stockée en mémoire EEPROM 114, notamment si la donnée de vérification d'intégrité applicable avait été directement intégrée à l'objet 210. Il est alors mis fin à l'algorithme de la Fig. 3.

Dans l'étape 310, l'interpréteur exécute le code intermédiaire obtenu à l'étape 301. Cela signifie notamment que, si le code intermédiaire obtenu à l'étape 301 correspond à une manipulation d'un objet non protégé, l'interpréteur ne fait pas appel au système d'exploitation pour effectuer une vérification d'intégrité. Cela signifie aussi que, si le code intermédiaire obtenu à l'étape 301 correspond à une création d'un objet qui n'est pas à protéger, l'interpréteur crée ledit objet, e.g. comme le ferait une machine virtuelle JCVM classique, mais lui adjoint des métadonnées additionnelles avec des valeurs par défaut qui indiquent que ledit objet n'est pas protégé, comme décrit ci-dessus en relation avec la Fig. 2A. Il est alors mis fin à l'algorithme de la Fig. 3.

Dans l'étape 311, l'interpréteur fait appel au système d'exploitation pour modifier les métadonnées additionnelles, comme décrit ci-dessus en relation avec la Fig. 2A. Les métadonnées additionnelles incluent alors un marqueur indiquant que l'objet en question est protégé, et une donnée de vérification d'intégrité ou une référence pointant vers une telle donnée de vérification d'intégrité. A partir de cet instant, l'intégrité de l'objet en question est vérifiée, à chaque manipulation dudit objet, par le système d'exploitation à l'initiative de l'interpréteur. Il est alors mis fin à l'algorithme de la Fig. 3.

L'algorithme de la Fig. 3 est alors réitéré pour chaque nouvelle ligne de code intermédiaire à faire exécuter par l'interpréteur dans le cadre de l'exécution de ladite application.

L'algorithme de la Fig. 3 a été décrit pour prendre en compte des objets qui sont à protéger intégralement. Comme décrit ci-dessus en relation avec la Fig. 2B, les objets peuvent être partiellement protégés (la granularité devient la donnée membre de chaque objet plutôt que l'objet lui-même). Au vu de ce qui précède, l'algorithme de la Fig. 3 peut aisément être adapté pour prendre en compte cet aspect. En effet, il suffit de considérer qu'un objet qui comporte au moins une donnée membre protégée comme décrit ci-dessus en relation avec la Fig. 2B est un objet protégé (c'est-à-dire un objet pour lequel l'interpréteur doit faire au moins une vérification d'intégrité en cas de manipulation dudit objet). Les vérifications et mises à jour des données de vérification d'intégrité se font alors au niveau des données membres de l'objet en question.

Dans le brevet EP 1 960 934 B1, intitulé *« Procédé pour sécuriser l'exécution d'un code logiciel en langage intermédiaire dans un appareil portatif »,* il est proposé un mécanisme de sécurisation d'exécution d'un code intermédiaire. Une pile (« stack » en anglais) d'exécution est implémentée pour empiler des variables d'exécution de l'application, et une pile (« stack » en anglais) de sécurité lui est adjointe pour empiler des données de vérification permettant de vérifier, avant leur manipulation, que les variables d'exécution de l'application présentes dans la pile d'exécution n'ont pas été corrompues. Ainsi, tout code intermédiaire agissant sur une donnée considérée comme sensible doit générer une action à la fois sur la pile d'exécution et sur la pile de sécurité. L'interprétation du code intermédiaire par l'interpréteur nécessite d'être modifiée pour synchroniser les opérations sur la pile de sécurité avec celles sur la pile d'exécution. Chaque fois qu'une donnée *val* est placée sur la pile d'exécution, une donnée correspondante de vérification d'intégrité *Chk(val)* est générée et ajoutée en correspondance sur la pile de sécurité, où *Chk* est un homomorphisme. A chaque fois qu'une opération arithmétique ou logique est exécutée en utilisant la donnée *val* sur la pile d'exécution, une opération correspondante de contrôle est exécutée sur la pile de sécurité en utilisant la donnée *Chk(val).* Les données sur les deux piles doivent rester cohérentes, et si les pointeurs des deux piles viennent à être désynchronisés suite à une attaque par perturbation, cette cohérence ne peut pas être assurée et l'attaque par perturbation est détectée.

Dans un mode de réalisation particulier de l'invention dans lequel la pile d'exécution est ainsi associée à une pile de sécurité, lorsqu'une référence à un objet protégé est placée dans la pile d'exécution, une référence sur la valeur d'intégrité associée à cet objet protégé est placée en correspondance dans la pile de sécurité. Ainsi, lors de l'exécution du code intermédiaire correspondant, l'interpréteur est en mesure de faire appel au système d'exploitation pour facilement pouvoir mettre à jour et/ou vérifier la valeur de la donnée de vérification d'intégrité de l'objet en question. Chaque fois qu'une variable d'exécution *val'* est placée sur la pile d'exécution dans le cadre d'une manipulation d'objet, une donnée correspondante de vérification d'intégrité *Chk(val')* est générée et ajoutée en correspondance sur la pile de sécurité par le système d'exploitation à l'initiative de l'interpréteur. Et, lorsque le système d'exploitation vérifie (voir étape 306) que la valeur de donnée de vérification d'intégrité calculée pour l'objet protégé en question concorde avec la valeur de donnée de vérification d'intégrité de référence pour ledit objet protégé, le système d'exploitation vérifie en outre que la valeur de donnée de vérification d'intégrité calculée pour ledit objet protégé concorde avec la valeur pointée par la référence correspondante placée sur la pile de sécurité. L'interpréteur peut s'assurer par ce biais qu'une attaque par perturbation n'a pas modifié la référence de l'objet à manipuler. En effet, en cas de corruption, la donnée de vérification d'intégrité obtenue grâce à la référence sur l'objet placé dans la pile d'exécution ne sera pas cohérente avec la donnée de vérification d'intégrité obtenue grâce à la référence placée en correspondance dans la pile de sécurité. De plus, si les pointeurs des deux piles viennent à être désynchronisés suite à une attaque par perturbation, la vérification d'intégrité de l'objet en question est un échec et l'attaque par perturbation est détectée.

Ce mode de réalisation particulier de l'invention dans lequel la pile d'exécution est ainsi associée à une pile de sécurité s'applique de manière similaire aux données membres de l'objet en question lorsque la protection décrite en relation avec la Fig. 2B est implémentée. Grâce à ce mode de réalisation particulier de l'invention, la protection contre les attaques par perturbation est renforcée.

A noter qu'il est possible de protéger, tel que décrit ci-dessus, tous les objets d'applications qui sont manipulés par l'interpréteur. Pour des questions de performance, il est toutefois préférable de ne protéger ainsi que les objets qui le nécessitent vraiment. Cette flexibilité est offerte par le mécanisme de protection contre les attaques par perturbation qui a été décrit ci-dessus.

## Revendications

1. Procédé d'exécution d'une application développée en langage orientée objet et compilée en code intermédiaire, le procédé étant mis en oeuvre dans un système d'exploitation installé sur une carte électronique (100), le système d'exploitation comportant un interpréteur qui est un logiciel interprétant et exécutant le code intermédiaire de l'application,
lorsque l'interpréteur détecte un appel à une fonction dédiée du système d'exploitation dans le code intermédiaire de l'application vis-à-vis d'un objet à protéger de l'application ou d'une donnée membre à protéger dudit objet, le système d'exploitation met à jour des métadonnées (220 ; 260) associées audit objet de sorte à associer une donnée de vérification d'intégrité (230 ; 271 ; 272 ; 273) de référence audit objet ou respectivement à ladite donnée membre,
lorsque l'interpréteur détecte une manipulation ultérieure de l'objet protégé ou respectivement de ladite donnée membre protégée dans le code intermédiaire de l'application, le système d'exploitation détermine (305) une valeur de donnée de vérification d'intégrité correspondant audit objet protégé en l'état ou respectivement de ladite donnée membre protégée en l'état, et avant que l'interpréteur n'effectue ladite manipulation, le système d'exploitation vérifie (306) que la valeur de donnée de vérification d'intégrité calculée concorde avec la valeur de donnée de vérification d'intégrité de référence.

2. Procédé selon la revendication 1, **caractérisé en ce que**, sur appel à ladite fonction dédiée dans le code intermédiaire de l'application vis-à-vis d'un objet à protéger de l'application ou d'une donnée membre à protéger dudit objet, le système d'exploitation met à jour (311) les métadonnées (221 ; 261) associées audit objet de sorte à indiquer que ledit objet ou respectivement ladite donnée membre est protégé(e),
et **en ce que**, lors d'une manipulation ultérieure d'un objet ou respectivement d'une donnée membre d'un objet dans le code intermédiaire de l'application, le système d'exploitation vérifie (304) si ledit objet ou respectivement ladite donnée membre est protégé(e), et si tel n'est pas le cas, le système d'exploitation n'effectue pas de vérification d'intégrité pour ledit objet ou respectivement ladite donnée membre.

3. Procédé selon l'une quelconque des revendications 1 et 2, **caractérisé en ce que**, lorsque le code intermédiaire de l'application demande une modification d'un objet protégé ou d'une donnée membre protégée d'un objet, le système d'exploitation détermine (309) en conséquence une nouvelle donnée de vérification d'intégrité de référence à associer audit objet protégé ou respectivement à ladite donnée membre protégée.

4. Procédé selon l'une quelconque des revendications 1 à 3, **caractérisé en ce que** lesdites métadonnées comprennent une référence (222 ; 262) pointant sur ladite donnée de vérification d'intégrité de référence.

5. Procédé selon l'une quelconque des revendications 1 à 4, **caractérisé en ce que** l'interpréteur utilise une pile d'exécution pour empiler des variables d'exécution de l'application, à laquelle est adjointe une pile de sécurité pour empiler en correspondance des données de vérification permettant de vérifier, avant leur manipulation, que les variables d'exécution de l'application présentes dans la pile d'exécution n'ont pas été corrompues,
et **en ce que**, lorsqu'une référence à un objet protégé ou à une donnée membre protégée d'un objet est placée dans la pile d'exécution, une référence sur la valeur d'intégrité associée audit objet protégé ou à ladite donnée membre protégée est placée en correspondance dans la pile de sécurité, de telle sorte que, lorsque le système d'exploitation vérifie (306) que la valeur de donnée de vérification d'intégrité calculée pour ledit objet protégé ou ladite donnée membre protégée concorde avec la valeur de donnée de vérification d'intégrité de référence, le système d'exploitation vérifie en outre que la valeur de donnée de vérification d'intégrité calculée pour ledit objet protégé ou ladite donnée membre protégée concorde avec la valeur pointée par la référence correspondante placée sur la pile de sécurité.

6. Procédé selon l'une quelconque des revendications 1 à 5, **caractérisé en ce que** la carte électronique est une carte à puce, l'application est une application Java Card, le système d'exploitation prend la forme d'un environnement JCRE, et l'interpréteur prend la forme d'une machine virtuelle JCVM.

7. Produit programme d'ordinateur, **caractérisé en ce qu'**il comporte des instructions causant l'implémentation, par une carte électronique, du procédé selon l'une quelconque des revendications 1 à 6, lorsque lesdites instructions sont exécutées par un processeur de ladite carte électronique.

8. Support de stockage d'informations, **caractérisé en ce qu'**il stocke un programme d'ordinateur selon la revendication 7.

9. Carte électronique (100) configurée pour exécuter une application développée dans un langage orienté objet et compilée en code intermédiaire, le code intermédiaire étant exécuté par un interpréteur d'un système d'exploitation installé sur ladite carte électronique, l'interpréteur étant un logiciel interprétant et exécutant le code intermédiaire de l'application,
la carte électronique est configurée pour que, lorsque l'interpréteur détecte un appel à une fonction dédiée du système d'exploitation dans le code intermédiaire de l'application vis-à-vis d'un objet de l'application ou d'une donnée membre dudit objet, le système d'exploitation met à jour des métadonnées (220 ; 260) associées audit objet de sorte à associer une donnée de vérification d'intégrité de référence (230 ; 271 ; 272 ; 273) audit objet ou respectivement à ladite donnée membre,
lorsque l'interpréteur détecte une manipulation ultérieure dudit objet ou respectivement de ladite donnée membre dans le code intermédiaire de l'application, le système d'exploitation détermine (305) une valeur de donnée de vérification d'intégrité correspondant audit objet ou respectivement de ladite donnée membre en l'état, et avant que l'interpréteur n'effectue ladite manipulation, le système d'exploitation vérifie (306) que la valeur de donnée de vérification d'intégrité calculée concorde avec la valeur de donnée de vérification d'intégrité de référence associée audit objet ou respectivement à ladite donnée membre.

10. Carte électronique selon la revendication 9, **caractérisée en ce que** ladite carte électronique est une carte à puce.

## Patentansprüche

1. Verfahren zur Ausführung einer in einer objektorientierten Sprache entwickelten und in Zwischencode kompilierten Anwendung, wobei das Verfahren in einem auf einer Elektronikkarte (100) installierten Betriebssystem angewendet wird, wobei das Betriebssystem einen Interpreter aufweist, der eine Software ist, die den Zwischencode der Anwendung interpretiert und ausführt,
wenn der Interpreter einen Aufruf einer dedizierten Funktion des Betriebssystems im Zwischencode der Anwendung gegenüber einem zu schützenden Objekt der Anwendung oder zu schützenden Mitgliedsdaten des Objekts erfasst, aktualisiert das Betriebssystem dem Objekt zugeordnete Metadaten (220; 260), um dem Objekt bzw. den Mitgliedsdaten Bezugs-Integritätsverifizierungsdaten (230; 271; 272; 273) zuzuordnen,
wenn der Interpreter eine spätere Manipulation des geschützten Objekts bzw. der geschützten Mitgliedsdaten im Zwischencode der Anwendung erfasst, bestimmt (305) das Betriebssystem einen Integritätsverifizierungsdatenwert entsprechend dem in dem Zustand geschützten Objekt bzw. den in dem Zustand geschützten Mitgliedsdaten, und ehe der Interpreter die Manipulation ausführt, verifiziert (306) das Betriebssystem, das der berechnete Integritätsverifizierungsdatenwert mit dem Bezugs-Integritätsverifizierungsdatenwert übereinstimmt.

2. Verfahren nach Anspruch 1, **dadurch gekennzeichnet, dass** nach Aufruf der dedizierten Funktion im Zwischencode der Anwendung gegenüber einem zu schützenden Objekt der Anwendung oder zu schützenden Mitgliedsdaten des Objekts das Betriebssystem die dem Objekt zugeordneten Metadaten (221; 261) aktualisiert (311), um anzuzeigen, dass das Objekt bzw. die Mitgliedsdaten geschützt ist(sind),
und dass bei einer späteren Manipulation eines Objekts bzw. von Mitgliedsdaten eines Objekts im Zwischencode der Anwendung das Betriebssystem verifiziert (304), ob das Objekt bzw. die Mitgliedsdaten geschützt ist(sind), und wenn dies nicht der Fall ist, das Betriebssystem keine Integritätsverifizierung für das Objekt bzw. den Mitgliedsdatenwert ausführt.

3. Verfahren nach einem der Ansprüche 1 und 2, **dadurch gekennzeichnet, dass**, wenn der Zwischencode der Anwendung eine Änderung eines geschützten Objekts oder von geschützten Mitgliedsdaten eines Objekts verlangt, das Betriebssystem dementsprechend neue Bezugs-Integritätsverifizierungsdaten bestimmt (309), die dem geschützten Objekt bzw. den geschützten Mitgliedsdaten zuzuordnen sind.

4. Verfahren nach einem der Ansprüche 1 bis 3, **dadurch gekennzeichnet, dass** die Metadaten einen Bezug (222; 262) enthalten, der auf die Bezugs-Integritätsverifizierungsdaten zeigt.

5. Verfahren nach einem der Ansprüche 1 bis 4, **dadurch gekennzeichnet, dass** der Interpreter einen Ausführungsstapel verwendet, um Ausführungsvariablen der Anwendung zu stapeln, dem ein Sicherheitsstapel beigefügt ist, um entsprechend Verifizierungsdaten zu stapeln, die es ermöglichen, vor ihrer Manipulation zu verifizieren, dass die im Ausführungsstapel vorhandenen Ausführungsvariablen der Anwendung nicht beschädigt worden sind,
und dass, wenn ein Bezug auf ein geschütztes Objekt oder geschützte Mitgliedsdaten eines Objekts im Ausführungsstapel angeordnet ist, ein Bezug auf den dem geschützten Objekt oder den geschützten Mitgliedsdaten zugeordneten Integritätswert entsprechend im Sicherheitsstapel angeordnet wird, so dass, wenn das Betriebssystem verifiziert (306), dass der für das geschützte Objekt oder die geschützten Mitgliedsdaten berechnete Integritätsverifizierungsdatenwert mit dem Bezugs-Integritätsverifizierungsdatenwert übereinstimmt, das Betriebssystem außerdem verifiziert, dass der für das geschützte Objekt oder die geschützten Mitgliedsdaten berechnete Integritätsverifizierungsdatenwert mit dem vom entsprechenden im Sicherheitsstapel angeordneten Bezug angezeigten Wert übereinstimmt.

6. Verfahren nach einem der Ansprüche 1 bis 5, **dadurch gekennzeichnet, dass** die Elektronikkarte eine Chipkarte ist, die Anwendung eine Java-Card-Anwendung ist, das Betriebssystem die Form einer JCRE-Umgebung annimmt, und der Interpreter die Form einer virtuellen Maschine JCVM annimmt.

7. Computerprogrammprodukt, **dadurch gekennzeichnet, dass** es Anweisungen aufweist, die die Implementierung, durch eine Elektronikkarte, des Verfahren nach einem der Ansprüche 1 bis 6 verursacht, wenn die Anweisungen von einem Prozessor der Elektronikkarte ausgeführt werden.

8. Informationsspeicherträger, **dadurch gekennzeichnet, dass** er ein Computerprogramm nach Anspruch 7 speichert.

9. Elektronikkarte (100), die konfiguriert ist, eine in einer objektorientierten Sprache entwickelte und in Zwischencode kompilierte Anwendung auszuführen, wobei der Zwischencode von einem Interpreter eines auf der Elektronikkarte installierten Betriebssystem ausgeführt wird, wobei der Interpreter eine Software ist, die den Zwischencode der Anwendung interpretiert und ausführt,
die Elektronikkarte konfiguriert ist, um, wenn der Interpreter einen Aufruf einer dedizierten Funktion des Betriebssystems im Zwischencode der Anwendung gegenüber einem Objekt der Anwendung oder Mitgliedsdaten des Objekts erfasst, das Betriebssystem dem Objekt zugeordnete Metadaten (220; 260) aktualisiert, um dem Objekt bzw. den Mitgliedsdaten Bezugs-Integritätsverifizierungsdaten (230; 271; 272; 273) zuzuordnen,
wenn der Interpreter eine spätere Manipulation des Objekts bzw. der Mitgliedsdaten im Zwischencode der Anwendung erfasst, das Betriebssystem einen dem Objekt bzw. den Mitgliedsdaten in dem Zustand entsprechenden Integritätsverifizierungsdatenwert bestimmt (305), und ehe der Interpreter die Manipulation ausführt, das Betriebssystem verifiziert (306), dass der berechnete Integritätsverifizierungsdatenwert mit dem dem Objekt bzw. den Mitgliedsdaten zugeordneten Bezugs-Integritätsverifizierungsdatenwert übereinstimmt.

10. Elektronikkarte nach Anspruch 9, **dadurch gekennzeichnet, dass** die Elektronikkarte eine Chipkarte ist.

## Claims

1. Method for executing an application developed in object oriented language and compiled into intermediate code, the method being implemented in an operating system installed on an electronic card (100), the operating system comprising an interpreter which is an item of software interpreting and executing the intermediate code of the application,
when the interpreter detects a call to a dedicated function of the operating system in the intermediate code of the application in respect of an object to be protected of the application or of a member datum to be protected of said object, the operating system updates metadata (220; 260) associated with said object so as to associate a reference integrity verification datum (230; 271; 272; 273) with said object or respectively with said member datum,
when the interpreter detects a subsequent manipulation of the protected object or respectively of said protected member datum in the intermediate code of the application, the operating system determines (305) an integrity verification datum value corresponding to said protected object as is or respectively of said protected member datum as is, and before the interpreter performs said manipulation, the operating system verifies (306) that the integrity verification datum value calculated agrees with the reference integrity verification datum value.

2. Method according to Claim 1, **characterized in that**, on call to said dedicated function in the intermediate code of the application in respect of an object to be protected of the application or of a member datum to be protected of said object, the operating system updates (311) the metadata (221; 261) associated with said object so as to indicate that said object or respectively said member datum is protected,
and **in that**, during a subsequent manipulation of an object or respectively of a member datum of an object in the intermediate code of the application, the operating system verifies (304) whether said object or respectively said member datum is protected, and if such is not the case, the operating system does not perform any integrity verification for said object or respectively said member datum.

3. Method according to either one of Claims 1 and 2, **characterized in that**, when the intermediate code of the application requests a modification of a protected object or of a protected member datum of an object, the operating system determines (309) as a consequence a new reference integrity verification datum to be associated with said protected object or respectively with said protected member datum.

4. Method according to any one of Claims 1 to 3, **characterized in that** said metadata comprise a reference (222; 262) pointing to said reference integrity verification datum.

5. Method according to any one of Claims 1 to 4, **characterized in that** the interpreter uses an execution stack to stack execution variables of the application, to which is appended a security stack to stack in correspondence verification data making it possible to verify, before their manipulation, that the execution variables of the application that are present in the execution stack have not been corrupted,
and **in that**, when a reference to a protected object or to a protected member datum of an object is placed in the execution stack, a reference on the integrity value associated with said protected object or with said protected member datum is placed in correspondence in the security stack, in such a way that, when the operating system verifies (306) that the integrity verification datum value calculated for said protected object or said protected member datum agrees with the reference integrity verification datum value, the operating system verifies furthermore that the integrity verification datum value calculated for said protected object or said protected member datum agrees with the value pointed to by the corresponding reference placed on the security stack.

6. Method according to any one of Claims 1 to 5, **characterized in that** the electronic card is a chip card, the application is a Java Card application, the operating system takes the form of a JCRE environment, and the interpreter takes the form of a JCVM virtual machine.

7. Computer program product, **characterized in that** it comprises instructions causing the implementation, by an electronic card, of the method according to any one of Claims 1 to 6, when said instructions are executed by a processor of said electronic card.

8. Information storage medium, **characterized in that** it stores a computer program according to Claim 7.

9. Electronic card (100) configured to execute an application developed in an object oriented language and compiled into intermediate code, the intermediate code being executed by an interpreter of an operating system installed on said electronic card, the interpreter being an item of software interpreting and executing the intermediate code of the application,
the electronic card is configured so that, when the interpreter detects a call to a dedicated function of the operating system in the intermediate code of the application in respect of an object of the application or of a member datum of said object, the operating system updates metadata (220; 260) associated with said object so as to associate a reference integrity verification datum (230; 271; 272; 273) with said object or respectively with said member datum,
when the interpreter detects a subsequent manipulation of said object or respectively of said member datum in the intermediate code of the application, the operating system determines (305) an integrity verification datum value corresponding to said object or respectively of said member datum as is, and before the interpreter performs said manipulation, the operating system verifies (306) that the integrity verification datum value calculated agrees with the reference integrity verification datum value associated with said object or respectively with said member datum.

10. Electronic card according to Claim 9, **characterized in that** said electronic card is a chip card.
